# FASCICULE DE BREVET EUROPEEN

(11) **EP 3 931 694 B1**
(45) Date de publication et mention de la délivrance du brevet: **26.11.2025**
(21) Numéro de dépôt: 20710231.0
(22) Date de dépôt: 17.02.2020
(51) Int. Cl.: G06F 9/455, H04L 43/0817, H04L 43/20, H04L 43/50, G06F 11/3668

(54) **PROCÉDÉ D'ÉVALUATION DES DISPOSITIFS D'UNE INFRASTRUCTURE DE RÉSEAU EN VUE DU DÉPLOIEMENT D'UNE FONCTION VIRTUALISÉE**
VERFAHREN ZUR AUSWERTUNG DER VORRICHTUNGEN EINER NETZWERKINFRASTRUKTUR FÜR DEN EINSATZ EINER VIRTUALISIERTEN FUNKTION
METHOD FOR EVALUATING THE DEVICES OF A NETWORK INFRASTRUCTURE FOR DEPLOYING A VIRTUALISED FUNCTION

(30) Priorité: 27.02.2019 FR 1902037
(43) Date de publication de la demande: 05.01.2022
(73) Titulaire: Orange, 92130 Issy-les-Moulineaux (FR)
(72) Inventeur: FIEAU, Frédéric, 92326 CHÂTILLON CEDEX (FR); FROMENTOUX, Gaël, 92326 CHÂTILLON CEDEX (FR); STEPHAN, Emile, 92326 CHÂTILLON CEDEX (FR)
(86) Numéro de dépôt international: PCT/FR2020/050283
(87) Numéro de publication internationale: WO 2020/174156

(56) Documents cités:
- US-A1- 2018 095 802
- BARI, M. F.CHOWDHURY, S. R.AHMED, R.BOUTABA, R.: "On orchestrating virtual network functions, In Network and Service Management (CNSM)", 2015 LLTH INTERNATIONAL CONFERENCE ON, November 2015 (2015-11-01), pages 50 - 56, XP032838980

## Description

### 1. Domaine technique

L'invention se situe dans des réseaux de télécommunications mis en œuvre à partir d'architectures virtualisées. L'invention vise à améliorer le déploiement de fonctions virtualisées dans une infrastructure en s'assurant que l'infrastructure dispose de capacités suffisantes pour permettre le déploiement de fonctions virtualisées ayant des caractéristiques et des exigences diverses.

### 2. Etat de la technique

Le secteur des télécommunications, et plus globalement les infrastructures assurant les communications de terminaux et d'applications, est au cœur d'une transformation digitale qui s'appuie sur des technologies émergentes telles que la virtualisation des fonctions réseaux ( VNF- Virtual Network Functions) consistant à découpler les fonctions réseau des équipements physiques dédiés pour déployer les fonctions réseau dans des espaces de stockage, ou cloud, plus ou moins distribués et en s'appuyant sur des serveurs génériques. La virtualisation considérée dans la demande fait aussi bien référence à la technique de virtualisation, c'est-à-dire à l'installation d'une machine virtuelle comprenant un système d'exploitation sur un serveur, qu'à la technique consistant à installer une instance virtuelle ou conteneur sur un serveur, un système d'exploitation étant partagé entre des conteneurs sur le serveur.

Une fonction de réseau virtualisée (VNF) est considérée comme un ensemble de composants logiciels (VNFc - Virtual Network Function Component), dont chaque composant doit être exécuté sur un serveur tel qu'une machine virtuelle (VMs - Virtual Machines), ou conteneur (en anglais Container) au sein de l'architecture dite virtualisée. Dans la suite du document, le terme machine virtuelle comprend également le terme conteneur. Le déploiement d'un service réseau établi à partir de VNFs consiste donc à placer les différents composants des VNFs dans des machines virtuelles ayant les ressources nécessaires pour l'exécution des VNFs et consécutivement, pour la bonne mise en œuvre du service. Ces ressources, que ce soient des ressources de calcul, de stockage, de mémoire et de ressources réseaux, sont fournies par l'infrastructure hébergeant ces machines virtuelles/conteneurs.

Le déploiement des services réseaux, à destination de clients de l'opérateur d'un réseau de télécommunications ou pour l'opérateur lui-même, implique par conséquent le placement des instances virtuelles de fonctions (aussi appelées fonctions virtuelles ou VNFs) dans des VMs (ou conteneurs), qui correspond au problème de placement des VMs dans les architectures basées sur le « cloud computing », mais avec de nouvelles contraintes apportées par le contexte spécifique d'une architecture de télécommunications.

Ces contraintes sont par exemple les suivantes : certaines fonctions réseaux présentent de fortes contraintes en termes de latence et doivent par conséquent être déployées au plus près de l'utilisateur des services s'appuyant sur ces fonctions. Ces contraintes ont incité les opérateurs de télécommunications à revoir leurs infrastructures pour répondre à ces exigences, en distribuant massivement leurs centre de données (en anglais Data Centers) pour être présents dans des sites positionnés en bordure de réseau, communément appelés Points de Présence (PoP). Cette distribution des fonctions réseaux permet de proposer une qualité de service améliorée pour les utilisateurs finaux et de répondre aux exigences strictes de certaines fonctions réseau, par exemple les fonctions relatives au Radio Access Network (RAN). Ces centres de données distribués en bordure du réseau ont des capacités limitées en termes de ressources (calcul, stockage et ressources réseaux), notamment au regard des grands centres de données (Data Centers) déployés par les principaux acteurs de l'écosystème des applications.

Des approches permettant de répondre au problème de déploiement de VNFs telles que les techniques d'optimisation ILP (Integer Linear Programming) (Bari, M. F., Chowdhury, S. R., Ahmed, R., & Boutaba, R. (2015, November), On orchestrating virtual network functions, In Network and Service Management (CNSM), 2015 11th International Conference on (pp. 50-56*)*) ont été proposées mais ces techniques donnant des plans de placement exacts en optimisant plusieurs critères (coûts, consommation énergétique...) souffrent de plusieurs insuffisances parmi lesquelles:
- La solution répond à un problème de déploiement de VNFs. Or, un opérateur peut souhaiter disposer de données fiabilisées et suffisamment récentes quant aux capacités de serveurs déployés dans une architecture, indépendamment du besoin lié à l'installation d'une fonction virtuelle sur un serveur,
- un problème de passage à l'échelle (en anglais Scalability) : En effet, la résolution du problème pour une infrastructure massivement distribuée, peut prendre des heures, ce qui ne répond pas à l'exigence de faible latence d'une architecture virtualisée dans le domaine des télécommunications,
- un problème de fiabilité des informations : le placement s'effectue à partir d'une cartographie fondée sur des capacités déclarées de l'infrastructure qui peuvent être désuètes, non adaptées aux critères de placement pour la fonction virtualisée à déployer.

Le placement des fonctions virtualisées repose, selon la technique antérieure, sur des informations transmises par une entité en charge de la gestion de l'infrastructure à destination d'un contrôleur, en charge du placement. Ces informations sont déclaratives et possiblement non adaptées aux caractéristiques de la fonction virtualisée à déployer. En outre, notamment dans le cas où l'infrastructure est gérée par une entité distincte de l'entité gérant le placement de la fonction virtualisée, l'entité de gestion de l'infrastructure peut transmettre des informations non compréhensibles pour l'entité en charge du placement et même transmettre des informations non fiables. Cela peut se produire par exemple si l'entité en charge de l'infrastructure veut exploiter ses ressources au maximum et pratique par exemple la sur-réservation (c'est à dire l'overbooking) de ressources. Cela peut conduire à déployer des VNFs sur des machines virtuelles non préparées ou adaptées au type de VNFs et consécutivement, à une qualité moindre du service proposé à partir des VNFs.

Le document US 2018/0095802 A1 divulgue un système comprenant des ressources hardware dans lequel un indicateur de stress/contrainte est généré pour les ressources hardware. Cet indicateur de stress/contrainte peut ainsi être utilisé pour sélectionner une entité d'hébergement en vue de l'installation ou la migration d'une VNF (fonction virtualisée).

La présente invention a pour objet d'apporter des améliorations par rapport à l'état de la technique.

### 3. Exposé de l'invention

L'invention vient améliorer la situation à l'aide d'un procédé de détermination d'un dispositif d'hébergement d'une infrastructure de réseau d'un opérateur pour l'installation d'une fonction virtualisée, ladite fonction virtualisée contribuant à la transmission et au traitement d'au moins une information relative à un service, le procédé étant mis en œuvre par une entité de gestion de ladite infrastructure et comprenant:
- l'émission à destination d'une entité de virtualisation d'une requête de compatibilité comprenant au moins une donnée relative à un test d'une ressource du dispositif d'hébergement,
- la réception en provenance de l'entité de virtualisation d'au moins une première variable issue du test, relatif à la donnée émise, exécuté sur la ressource,
- la détermination de l'aptitude du dispositif d'hébergement à accueillir la fonction virtualisée en fonction de l'au moins une première variable reçue.

Le procédé de détermination permet de pouvoir contrôler qu'une machine virtuelle ou un conteneur ou un serveur ou tout autre dispositif apte à héberger une fonction virtualisée est apte à accueillir une fonction virtualisée. Lorsqu'une fonction virtualisée est susceptible d'être installée sur un dispositif d'hébergement d'une infrastructure physique, une entité de gestion, qui peut être par exemple un équipement de type VIM (Virtual Infrastructure Manager), transmet une donnée relative à un test ou des données relatives à plusieurs tests permettant de pouvoir établir qu'un dispositif d'hébergement, telle qu'une machine virtuelle ou un conteneur d'un serveur ou bien encore un serveur, est apte à accueillir la fonction virtualisée. La donnée relative à un test peut être un test, un identifiant de test ou bien encore un algorithme de test ou un fichier exécutable permettant de conduire le test. Si le dispositif d'hébergement est effectivement apte, la fonction virtualisée est susceptible de pouvoir être installée sur ce dispositif d'hébergement. Il s'agit par exemple de comparer des valeurs de résultats de tests de placement, obtenus par rapport à une fonction virtualisée à installer, pour ensuite déterminer si le dispositif d'hébergement est suffisamment apte à accueillir une fonction virtualisée. Le test réalisé par rapport à une fonction virtualisée permet d'une part de pouvoir s'assurer qu'un dispositif d'hébergement dispose des capacités qui ont pu être déclarées précédemment auprès de l'entité de gestion mais aussi de pouvoir s'assurer qu'une machine virtuelle dispose de capacités suffisantes pour une fonction virtualisée donnée en testant des ressources en lien avec les besoins et les caractéristiques de la fonction virtualisée. En outre, dans le cas où plusieurs dispositifs d'hébergement sont testés, il est possible de sélectionner le dispositif pour lequel les variables reçues correspondent le plus à des valeurs de référence ou en sélectionnant le dispositif d'hébergement ayant les variables les plus adaptées à la fonction virtualisée qui est susceptible d'être installée. L'envoi et l'exécution d'une donnée relative à un test en amont de l'installation d'une fonction virtualisée permet de garantir la compatibilité effective du dispositif d'hébergement pour une installation future de la fonction virtualisée ainsi que de mettre à jour ou compléter les tests en tirant parti des tests précédents et des installations de fonctions virtualisées déjà effectuées dans l'infrastructure de communication. Il est à noter que le procédé peut être mis en œuvre en l'absence du besoin d'installation, notamment pour obtenir un inventaire des dispositifs d'hébergement présents dans l'infrastructure physique ainsi que leurs capacités, indépendamment ou en complément des descriptions possiblement reçues.

Selon un aspect de l'invention, le procédé de détermination comprend en outre l'obtention d'au moins une deuxième variable à partir d'une évaluation d'au moins une capacité requise pour l'installation de la fonction virtualisée.

L'entité de gestion peut exécuter une évaluation de capacités permettant de pouvoir obtenir des variables qu'elle va pouvoir comparer avec des variables transmises par l'entité de virtualisation suite à l'exécution des mêmes tests relatifs à une machine virtuelle. Cette évaluation permet de pouvoir déterminer des valeurs théoriques requises pour l'installation d'une fonction virtualisée sur un dispositif d'hébergement. Ainsi les résultats des tests effectués par l'entité de virtualisation pourront être comparés avec les résultats de l'évaluation. L'avantage de réaliser une telle évaluation permet de pouvoir adapter la détermination à des conditions d'installation pouvant être modifiées selon l'infrastructure ou bien selon les modifications de la fonction virtualisée susceptible d'être installée.

Selon un autre aspect de l'invention, dans le procédé de détermination, l'au moins une deuxième variable comprend une durée T1 correspondant à une durée d'exécution de l'évaluation.

Certaines fonctions virtualisées requièrent des temps de latence faibles. L'évaluation a notamment pour objet de vérifier qu'un dispositif d'hébergement, sur lequel une fonction virtualisée sera possiblement installée, comprend les ressources nécessaires pour respecter la latence requise. L'entité de gestion pourra déterminer si un dispositif d'hébergement est adapté pour qu'une fonction virtualisée soit installée sur ce dispositif en ayant comme référence un temps T1 correspondant à une durée théorique à respecter pour l'exécution du test, la durée T1 étant par exemple relative au temps de latence à respecter par la fonction virtualisée pour une opération donnée.

Selon un autre aspect de l'invention, dans le procédé de détermination, l'au moins une donnée relative à un test est préalablement obtenue d'une entité de contrôle de la fonction virtualisée.

L'entité de contrôle d'une fonction virtualisée à déployer peut avantageusement transmettre le test de placement à l'entité de gestion. La gestion des tests par l'entité de contrôle, qui aura pu les obtenir précédemment d'une autre entité, par exemple une entité de type NFVO (NFV Orchestrator) permet de garantir que les tests à mettre en œuvre sur la machine virtuelle sont bien adaptés à une fonction virtualisée précise, l'entité de contrôle de la fonction virtualisée s'assurant que les tests correspondent effectivement à une fonction virtualisée ou à un même type de fonction virtualisée. Selon un autre aspect de l'invention, dans le procédé de détermination, l'au moins une donnée relative à un test est spécifique à au moins une caractéristique de la fonction virtualisée.

Le nombre de fonctions virtualisées au sein d'une infrastructure physique étant potentiellement assez important et ces fonctions virtualisées ayant des exigences concernant dispositifs d'hébergement différentes, il est intéressant de prévoir des tests en fonction de caractéristiques d'une fonction virtualisée. Ainsi, deux fonctions virtualisées pour lesquelles un faible temps de latence doit être respecté pourront requérir un même test pour sélectionner un dispositif d'hébergement sur lequel l'une et/ou l'autre de ces fonctions pourra être installée.

Selon un autre aspect de l'invention, dans le procédé de détermination, la ressource du dispositif d'hébergement est relative à un espace de stockage.

Avant d'envisager l'installation d'une fonction virtualisée, il est nécessaire de s'assurer que le dispositif d'hébergement dispose des capacités suffisantes en termes d'espace de stockage ou d'espace mémoire pour installer la fonction virtualisée. En effet, les informations de capacité des machines virtuelles qui ont possiblement été communiquées préalablement à l'entité de gestion peuvent ne pas être à jour, notamment si des fonctions virtualisées ont été installées ou désinstallées depuis la réception des informations. Le test effectué lors de l'installation effective de la fonction virtualisée ou de façon intempestive ou régulière pour établir une cartographie des ressources des dispositifs d'hébergement, permet donc d'éviter un échec de l'installation d'une fonction virtualisée faute d'espace mémoire ou bien d'actualiser les informations sur les dispositifs d'hébergement d'une infrastructure. L'espace mémoire peut notamment être une ressource critique pour une fonction virtualisée du plan utilisateur, telle qu'une S-GW (Serving Gateway), une P-GW (Packet Gateway) ou une BNG (Broadband Network Gateway).

Selon un autre aspect de l'invention, dans le procédé de détermination, la ressource du dispositif d'hébergement est relative à une capacité de calcul.

Une capacité de calcul est particulièrement importante pour des entités de contrôle de réseau telles qu'une entité MME (Mobility Management Entity) ou PCRF (Policy Control and Rules Function). Cette capacité de calcul est également particulièrement importante pour les équipements de type Pare-Feu (Firewall). Il apparait donc important d'évaluer les capacités en termes de capacité de calcul du dispositif d'hébergement où une fonction virtualisée MME, PCRF, ou Firewall notamment, sera possiblement installée.

Les différents aspects du procédé de détermination qui viennent d'être décrits peuvent être mis en œuvre indépendamment les uns des autres ou en combinaison les uns avec les autres.

L'invention concerne également un procédé d'examen d'une ressource d'un dispositif d'hébergement d'une infrastructure de réseau d'un opérateur en vue de l'installation d'une fonction virtualisée, ladite fonction virtualisée contribuant à la transmission et au traitement d'au moins une information relative à un service, le procédé étant mis en œuvre par une entité de virtualisation de ladite infrastructure et comprenant :
- la réception en provenance d'une entité de gestion de l'infrastructure d'une requête de compatibilité comprenant au moins une donnée relative à un test de la ressource,
- l'exécution sur la ressource de l'au moins un test relatif à la donnée reçue permettant d'obtenir au moins une première variable,
- l'émission à destination de l'entité de gestion de l'au moins une première variable. Selon un autre aspect de l'invention, dans le procédé d'examen, l'au moins une première variable comprend une durée T2.

L'entité de virtualisation calcule la durée pendant laquelle le test a été effectué. Le test à effectuer est sélectionné pour déterminer si le dispositif d'hébergement est apte à accueillir une fonction virtualisée et la durée d'exécution du test, donc le temps pris pour atteindre un résultat, peut également être une information pertinente pour évaluer la compatibilité de la machine virtuelle avec l'exigence de la fonction virtualisée. L'entité de gestion, à la réception du temps T2 peut ainsi le comparer au temps T1 dans le cas où un temps théorique a été déterminé par l'entité de gestion.

Les différents aspects du procédé d'examen qui viennent d'être décrits peuvent être mis en œuvre indépendamment les uns des autres ou en combinaison les uns avec les autres.

L'invention concerne également un dispositif de détermination d'un dispositif d'hébergement d'une infrastructure de réseau d'un opérateur pour l'installation d'une fonction virtualisée, ladite fonction virtualisée contribuant à la transmission et au traitement d'au moins une information relative à un service, comprenant:
- un émetteur, apte à émettre à destination d'une entité de virtualisation une requête de compatibilité comprenant au moins une donnée relative à un test d'une ressource du dispositif d'hébergement,
- un récepteur, apte à recevoir en provenance de l'entité de virtualisation au moins une première variable issue du test, relatif à la donnée émise, exécuté sur la ressource,
- un module de détermination, apte à déterminer l'aptitude d'un dispositif d'hébergement à accueillir la fonction virtualisée en fonction de l'au moins une première variable reçue.

Ce dispositif, apte à mettre en œuvre dans tous ses modes de réalisation le procédé de détermination qui vient d'être décrit, est destiné à être mis en œuvre dans une entité de gestion d'une infrastructure de communications, telle qu'une infrastructure virtualisée. Par exemple, le dispositif peut être mis en œuvre dans une entité de type VIM.

L'invention concerne également un dispositif d'examen d'une ressource d'un dispositif d'hébergement d'une infrastructure de réseau d'un opérateur en vue de l'installation d'une fonction virtualisée, ladite fonction virtualisée contribuant à la transmission et au traitement d'au moins une information relative à un service, comprenant :
- un récepteur, apte à recevoir en provenance d'une entité de gestion de l'infrastructure une requête de compatibilité comprenant au moins une donnée relative à un test de la ressource,
- un module d'exécution, apte à exécuter sur la ressource l'au moins un test relatif à la donnée reçue permettant d'obtenir au moins une première variable,
- un émetteur, apte à émettre à destination de l'entité de gestion l'au moins une première variable.

Ce dispositif, apte à mettre en œuvre dans tous ses modes de réalisation le procédé d'examen qui vient d'être décrit, est destiné à être mis en œuvre dans une entité de gestion de ressources d'hébergement telle qu'un hyperviseur ou une entité d'administration de machines virtuelles et/ou de conteneurs.

L'invention concerne aussi un système de détermination d'un dispositif d'hébergement d'une infrastructure de réseau d'un opérateur pour l'installation d'une fonction virtualisée, ladite fonction virtualisée contribuant à la transmission et au traitement d'au moins une information relative à un service, comprenant :
- un dispositif de détermination,
- un dispositif d'examen,
- au moins un dispositif d'hébergement.

L'invention concerne aussi un programme d'ordinateur comprenant des instructions pour la mise en œuvre des étapes du procédé de détermination qui vient d'être décrit, lorsque ce programme est exécuté par un processeur et un support d'enregistrement lisible par un dispositif de détermination sur lequel est enregistré le programme d'ordinateur.

L'invention concerne aussi un programme d'ordinateur comprenant des instructions pour la mise en œuvre des étapes du procédé d'examen qui vient d'être décrit, lorsque ce programme est exécuté par un processeur et un support d'enregistrement lisible par un dispositif d'examen sur lequel est enregistré le programme d'ordinateur.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions des programmes d'ordinateur tel que mentionnés ci-dessus.

Le support d'informations peut être n'importe quelle entité ou dispositif capable de stocker les programmes. Par exemple, le support peut comporter un moyen de stockage, tel qu'une ROM, par exemple un CD ROM ou une ROM de circuit microélectronique, ou encore un moyen d'enregistrement magnétique, par exemple sur un disque dur.

D'autre part, le support d'informations peut être un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type Internet.

Alternativement, le support d'informations peut être un circuit intégré dans lequel les programmes sont incorporés, le circuit étant adapté pour exécuter ou pour être utilisé dans l'exécution des procédés en question.

L'invention est spécifiée par les revendications indépendantes annexées. En outre, des modes de réalisation préférés sont définis par les revendications dépendantes.

### 4. Brève description des dessins

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
[Fig 1] La figure 1 présente une vue simplifiée d'une infrastructure de communication dans laquelle est mise en œuvre l'invention selon un aspect de l'invention,
[Fig 2A] La figure 2A présente un premier dispositif d'hébergement apte à accueillir une fonction virtualisée selon un aspect de l'invention,
[Fig 2B] La figure 2B présente un premier dispositif d'hébergement apte à accueillir une fonction virtualisée selon un aspect de l'invention,
[Fig 3] La figure 3 présente un aperçu du procédé de détermination d'un dispositif d'hébergement selon une technique de l'art antérieur,
[Fig 4] La figure 4 présente un aperçu du procédé de détermination d'un dispositif d'hébergement selon un premier mode de réalisation de l'invention,
[Fig 5] La figure 5 présente un aperçu du procédé de détermination d'un dispositif d'hébergement selon un deuxième mode de réalisation de l'invention,
[Fig 6] La figure 6 présente un exemple de structure d'un dispositif de détermination selon un aspect de l'invention,
[Fig 7] La figure 7 présente un exemple de structure d'un dispositif d'examen selon un aspect de l'invention.

### 5. Description des modes de réalisation

Dans la suite de la description, on présente des modes de réalisation de l'invention dans une infrastructure de communication. Cette infrastructure peut être mise en œuvre pour acheminer des données de communications à destination de terminaux fixes ou mobiles et l'invention peut être destinée à installer des fonctions virtualisées utilisées pour l'acheminement et/ou le traitement de données de clientèle résidentielle ou d'entreprises.

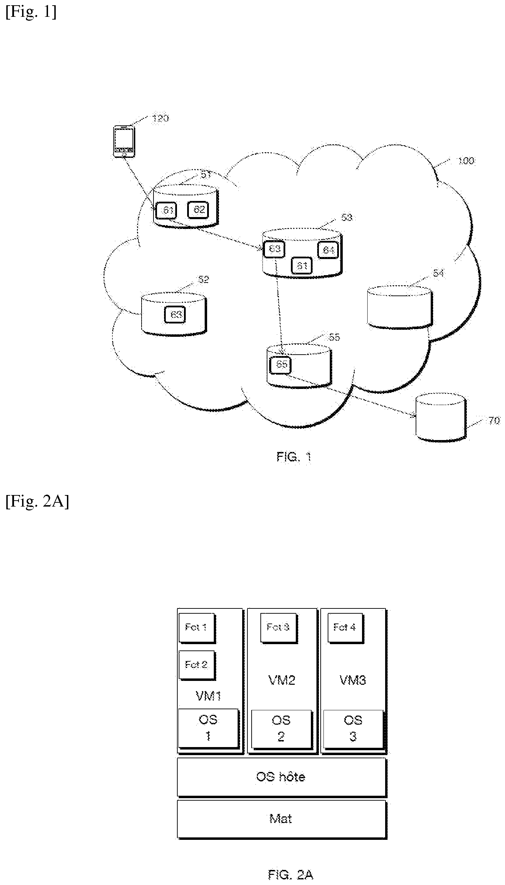

On se réfère tout d'abord à la figure 1 qui présente une vue simplifiée d'une infrastructure de communication dans laquelle est mise en œuvre l'invention selon un aspect de l'invention.

Un terminal 120, fixe ou mobile, transmet et reçoit des données vers ou d'un serveur 70 de données. Le serveur 70 peut être indifféremment un serveur web, un serveur DNS (en anglais Domain Name Server), un serveur DHCP (en anglais Dynamic Host Configuration Protocol), un serveur FTP (en anglais File Transfer Protocol) ou tout autre serveur transmettant des données au terminal 120. Les données sont acheminées entre le terminal 120 et le serveur 70 en utilisant des dispositifs d'une infrastructure 100 de communication. Les dispositifs peuvent être des équipements physiques en charge de réaliser des fonctions (routeurs, serveurs...) et/ou des fonctions virtualisées installées sur des machines virtuelles ou conteneurs dans des serveurs. Ainsi, une fonction de routage peut être indifféremment satisfaite par un dispositif physique tel qu'un routeur ou une fonction virtualisée de routage installée sur une machine virtuelle d'un serveur. Les données entre le terminal 120 et le serveur 70 sont acheminées via les fonctions 61, 63 et 65 respectivement installées sur des dispositifs d'hébergement 51, 53 et 55 tels que des machines virtuelles ou conteneurs supportés par des serveurs. On peut constater qu'un même serveur peut accueillir plusieurs fonctions comme c'est le cas par exemple pour le serveur 53 qui accueille les fonctions 63, 61, 64 installées sur une même machine virtuelle ou des machines virtuelles distinctes. Une même fonction peut par ailleurs être installée sur deux serveurs distincts, par exemple pour améliorer la disponibilité de la fonction ainsi que le traitement des données effectuées par cette fonction. Par exemple, la fonction 61 est déployée sur le serveur 51 ainsi que sur le serveur 53. L'acheminement des données entre le terminal 120 et le serveur 70 est réalisé en chaînant les fonctions, ce qui revient à créer un graphe de données entre le terminal 120 et le serveur 70. Il est à noter que les serveurs 51, 52, 53, 54, 55 respectifs peuvent être administrées par des entités différentes et peuvent être localisés dans des endroits différents, à proximité du client 120 ou du serveur 70, notamment pour permettre de tenir compte des contraintes des fonctions, notamment en terme de latence, mises en œuvre dans les serveurs. Les serveurs peuvent ainsi être installés dans des espaces de type « cloud » centralisés ou distribués. Les fonctions 61, 62, 63, 64, 65 peuvent assurer l'acheminement des données et/ou assurer un traitement sur ces données. Ainsi, les fonctions peuvent être des fonctions de routage, des fonctions relatives à un réseau mobile telles que S-GW (Serving Gateway), P-GW (Packet Data Network Gateway), MME (Mobility Management Entity), ou bien des fonctions de traitement telles que Pare-Feu, Optimisation Web, DPI (Deep Packet Inspection)...L'infrastructure 100 de communication est simplifiée et peut comprendre en outre des dispositifs d'administration de l'infrastructure, un grand nombre de fonctions et de serveurs. De même, des données peuvent être acheminées en utilisant les ressources de plusieurs infrastructures de communication telles que l'infrastructure 100.

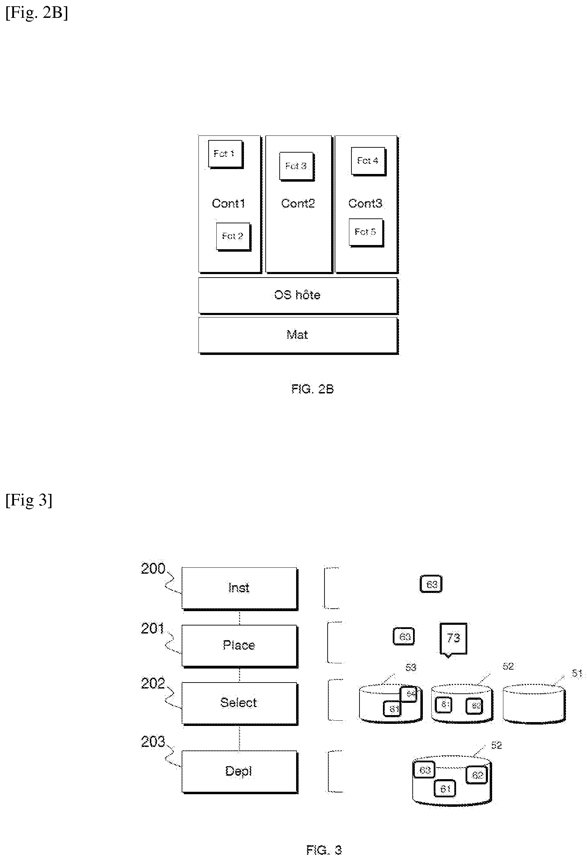

En relation avec les figure 2A et 2B, on présente des dispositifs d'hébergement aptes à accueillir une fonction virtualisée selon des aspects de l'invention.

La figure 2A fait référence à la technique de virtualisation alors que la figure 2B fait référence à la technique de conteneurisation. Ces deux types de techniques, non exclusives, peuvent être indifféremment utilisés pour installer des fonctions. Dans la figure 2A, relative à la technique de virtualisation, les fonctions Fct 1 et Fct 2 sont installées dans une machine virtuelle VM1. La machine virtuelle VM1 dispose de son propre système d'exploitation OS1. Le serveur sur lequel est installée la machine virtuelle VM1 est doté de son propre système d'exploitation « OS hôte » et de composants matériels « Mat » (en anglais Hardware). Ainsi, les 3 machines virtuelles VM1, VM2, VM3 comprennent leurs propres systèmes d'exploitation, à savoir OS1, OS2, OS3 et sur ces machines virtuelles, sont installées les fonctions Fct 1, Fct 2, Fct 3, Fct 4. Dans ce cas, un dispositif d'hébergement peut être une des machines virtuelles ou bien le serveur sur lequel sont installées les 3 machines virtuelles VM1, VM2, VM3.

La figure 2B fait référence à la technique de conteneurisation. Le serveur de la figure 2B comprend les composants matériels Mat, l'OS hôte et les 3 conteneurs Cont1, Cont2 et Cont3. Ces conteneurs, à la différence des machines virtuelles présentées en figure 2A ne comprennent pas de systèmes d'exploitation propres aux conteneurs. Les conteneurs utilisent le système d'exploitation OS Hôte partagé, proposé par le serveur. Il est à noter que le serveur comprenant les conteneurs peut également avoir une interface d'adaptation entre l'OS hôte et les conteneurs. Les fonctions sont installées dans les conteneurs. Comme indiqué sur la figure 2B, les fonctions Fct 1 et Fct 2 sont co-localisées dans le conteneur Cont1, alors que la fonction Fct 3 est installée dans le conteneur Cont2. Les fonctions Fct 4 et Fct 5 sont installées dans le conteneur Cont3. Dans ce cas, les dispositifs d'hébergement sont aussi bien les conteneurs respectifs Cont1, Cont2, Cont3 que le serveur comprenant ces conteneurs.

Il est à noter que ces exemples présentés dans les figures 2A et 2B ne sont pas exclusifs. Notamment, il est possible d'envisager des serveurs comprenant à la fois des machines virtuelles ainsi que des conteneurs.

On se réfère maintenant à la figure 3 qui présente un aperçu du procédé de détermination d'un dispositif d'hébergement selon une technique de l'art antérieur.

Selon une technique antérieure, quatre étapes 200, 201, 202 et 203 sont identifiées pour installer une fonction dans un dispositif d'hébergement. Lors de l'étape 200, une entité d'administration requiert auprès d'une entité d'orchestration l'installation d'une fonction 63. Cette demande d'installation peut être mise en œuvre pour satisfaire un nouveau service à destination d'un client, ou pour supporter une charge trop importante constatée sur une fonction déjà déployée, et sur la nécessité de répliquer cette fonction, ou pour une mise à jour d'un service mis en œuvre par un opérateur par exemple pour répondre par exemple à un problème de qualité de service et/ou de sécurité. Des raisons diverses peuvent ainsi conduire l'entité d'administration à demander l'installation d'une nouvelle fonction 63. Dans cet exemple, l'entité d'administration transmet cette demande d'installation lors de l'étape 200 à une entité d'orchestration en charge des services réseau. La demande d'installation peut optionnellement comprendre des informations relatives à la fonction telles que des informations relatives aux services mis à œuvre à partir de cette fonction 63, voire des exigences en termes de qualité de service à supporter pour la fonction 63. La demande d'installation peut en outre comprendre un paramètre de localisation correspondant à une zone du réseau permettant de respecter ses contraintes en termes de latence. Ainsi, une zone de disponibilité peut ainsi être transmise en complément de la fonction 63. L'entité d'orchestration, à partir des informations reçues à l'étape 200, détermine lors de l'étape 201 les exigences de placement de la fonction pour que les services utilisant cette fonction soient proposés avec une qualité suffisante et pour respecter les informations de localisation possiblement reçues. L'entité d'orchestration définit ainsi des exigences 73 de placement pour la fonction 63. Ces exigences peuvent correspondre à des besoins d'espace de stockage, de capacités de calcul, de latence... En outre, lors de cette étape 201, l'entité d'orchestration transmet la requête de placement de la fonction 63 comprenant les exigences 73 à une entité de contrôle de la fonction 63.

L'entité de contrôle, à partir des informations reçues de l'entité d'orchestration, doit procéder à la sélection lors de l'étape 202 d'un dispositif d'hébergement de l'infrastructure répondant aux exigences indiquées. Afin de pouvoir sélectionner un dispositif d'hébergement adapté aux exigences, une entité en charge de l'infrastructure peut assister l'entité de contrôle par exemple en confrontant les informations de l'entité de contrôle avec les données en sa possession sur les dispositifs d'hébergement de l'infrastructure de communication. Selon la technique antérieure, l'entité de contrôle dispose d'informations déclaratives sur les serveurs 53, 52, 51 ou sur des machines virtuelles installées sur ces serveurs de l'infrastructure de communication et ne teste pas l'exactitude des informations reçues pour l'installation, ou l'instanciation, de la fonction 63. L'entité de contrôle peut détenir des informations sur les serveurs ou sur les machines virtuelles ou conteneurs déployés sur les serveurs. Ainsi, dans l'exemple l'entité de contrôle a connaissance que le serveur 53 ou qu'une machine virtuelle du serveur 53 comprend les fonctions 61, 64 et il obtient en outre les caractéristiques du serveur 53 d'une machine virtuelle sur le serveur 53 obtenues possiblement en provenance de l'entité en charge de l'infrastructure. Il sait également que le serveur 52 héberge les fonctions 61 et 62 et que le serveur 51 n'héberge aucune fonction. L'entité de contrôle ne dispose que des informations déclarées, sous un format propre à l'entité qui les lui a transmises et il ne vérifie pas l'exactitude de ces informations. A partir de ces informations, l'entité de contrôle sélectionne le dispositif d'hébergement 52 et installe la fonction 63 sur ce dispositif 52 ou sur une machine virtuelle de ce dispositif 52 lors de l'étape 203.

Selon cet exemple, l'entité de contrôle a possiblement installé, via possiblement le concours d'une entité en charge de l'infrastructure comprenant le serveur 52, une fonction dans un dispositif d'hébergement qui n'était plus adapté, car les informations déclarées sur les serveurs de l'infrastructure n'étaient pas à jour ou étaient non complètement compréhensibles pour l'entité de contrôle. En outre, l'entité de contrôle ne dispose pas d'informations fiables sur les dispositifs d'hébergement, indépendamment de l'action d'installation, rendant toute opération de mise à jour de fonction, de déplacement de fonction voire de suppression de fonction, possiblement non efficiente.

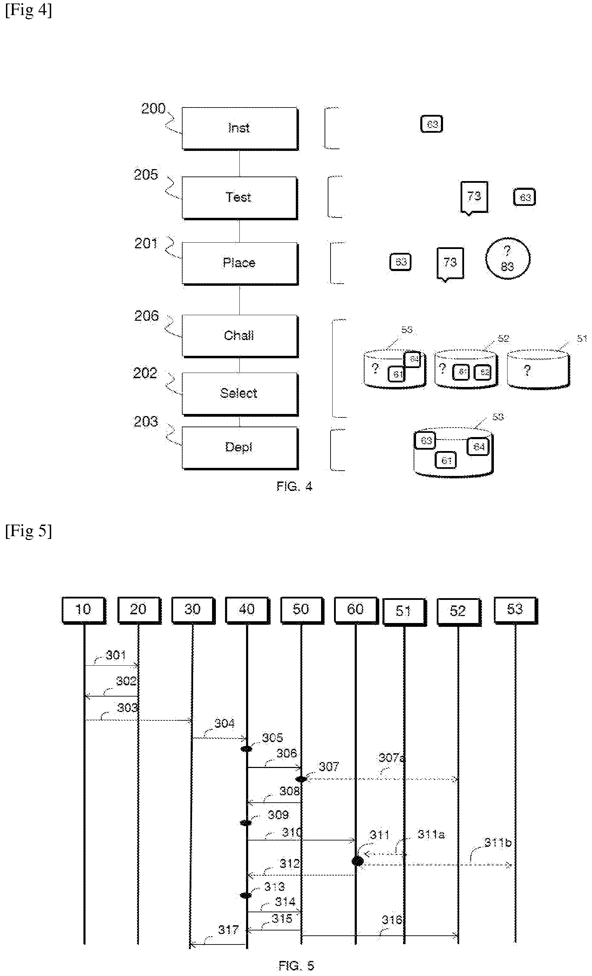

En relation avec la figure 4, on présente un aperçu du procédé de détermination d'un dispositif d'hébergement selon un premier mode de réalisation de l'invention.

L'étape 200 est équivalente à l'étape 200 de la figure 3.

Lors de l'étape 205, l'entité d'orchestration demande un test correspondant à la fonction 63 à installer. Cette demande peut être transmise à un équipement spécifique en charge de la gestion des tests ou bien à une entité existante prenant en charge les tests. Le test est destiné à évaluer les capacités d'un dispositif d'hébergement, donc un serveur, une machine virtuelle ou un conteneur, pour pouvoir accueillir la fonction 63 à installer. L'entité d'orchestration transmet un identifiant ou un type de fonction ainsi que les caractéristiques 73 nécessaires à l'installation de la fonction 63, possiblement reçues lors de l'étape 200 en provenance de l'entité d'administration ou bien déterminées par l'entité d'orchestration en fonction notamment du ou des services mis en oeuvre à partir de la fonction. Sachant que les fonctions à déployer dans une infrastructure sont possiblement très nombreuses et diverses, il pourra être opportun de déterminer des tests par type de fonction plutôt que par fonction de façon à limiter le nombre de tests et à faciliter leur gestion. Ainsi des fonctions de contrôle d'un réseau mobile (PCRF (Policy Control and Rules Function), MME, HSS (Home Subscriber Server)) pourront correspondre à un même test et les fonctions liées au plan usager pourront correspondre à un autre type de test. Le test peut ainsi porter sur une ou plusieurs caractéristiques de la fonction telles que la latence, la performance d'acheminement, le délai de traitement plutôt que sur la fonction virtualisée à installer. L'entité d'orchestration obtient le test 83 correspondant à la fonction virtualisée 63, ou au type de la fonction 63 à installer. Le test 83 est donc spécifique à la fonction ou au type de fonction à installer ainsi qu'à l'environnement dans lequel la fonction doit être installée, grâce aux caractéristiques 73 requises pour l'installation de la fonction 63. L'entité d'orchestration, selon une alternative, obtient un identifiant de test ou toute donnée relative à un test permettant de pouvoir effectivement associer la donnée relative au test à un test.

Lors de l'étape 201, l'entité d'orchestration transmet à une entité de contrôle, puis une entité de gestion de l'infrastructure, la requête de placement comprenant les caractéristiques 73 ainsi que le test 83 obtenu lors de l'étape 205 à une entité de contrôle de la fonction 63. Selon une alternative, l'entité d'orchestration transmet le test, ou bien un identifiant de test, ou bien un algorithme ou bien encore un fichier exécutable ou toute donnée relative à un test et permettant d'associer un test ou un type de test à la donnée.

A l'étape 202 de sélection d'un dispositif d'hébergement pour l'installation de la fonction 63, précède une étape 206 de challenge de dispositifs d'hébergement. Lors de cette étape 206 de challenge, l'entité de contrôle sollicite une entité de gestion d'une infrastructure de communication, les différents dispositifs d'hébergement susceptibles d'accueillir la fonction 63. Pour limiter le nombre de dispositifs à tester, l'entité de contrôle peut optionnellement utiliser les informations déclaratives obtenues précédemment, permettant d'établir un pré-tri et de limiter le nombre de dispositifs d'hébergement à évaluer. Les trois dispositifs d'hébergement 51, 52, 53 sont testés en appliquant le test 83. L'entité de gestion, sollicitée par l'entité de contrôle, peut ainsi sélectionner, lors de l'étape 202, le dispositif d'hébergement dont les résultats du test sont les plus adaptés à la fonction 63. Ce test effectué sur les dispositifs d'hébergement permet dont d'améliorer la pertinence du dispositif d'hébergement sélectionné pour l'installation de la fonction en ayant des informations à jour sur les dispositifs d'hébergement et en disposant d'informations adaptées à la fonction ou aux caractéristiques de la fonction virtualisée à installer. Ce procédé mis en œuvre pour l'installation peut également être utilisé indépendamment de l'installation de la fonction, par exemple pour établir un inventaire d'une infrastructure de communication au regard d'un ensemble de fonctions possiblement diverses. Lors de l'étape 203, la fonction 63 est installée dans le serveur 53 sélectionné lors de l'étape de sélection 202, suite à la réalisation du test 83 sur les trois serveurs 51, 52, 53 de l'infrastructure de communication.

En relation avec la figure 5, on présente un aperçu du procédé de détermination d'un dispositif d'hébergement selon un deuxième mode de réalisation de l'invention

A l'étape 301, une entité 10 d'orchestration transmet à une entité 20 de gestion des tests une demande de test d'une ressource d'un dispositif d'hébergement pour l'installation d'une fonction virtualisée. Cette demande de test est relative à une fonction virtualisée qui aura pu être précédemment requise auprès de l'entité 10 d'orchestration par une entité d'administration de services et/ou de réseaux, telle qu'une entité OSS/BSS (Operation Support System/Business Support System) pour améliorer la fourniture d'un service et/ou pour enrichir un service proposé à un client. Il est considéré, à titre d'exemple, dans la suite de l'aperçu qu'il s'agit d'une fonction de type P-GW à mettre en œuvre dans l'infrastructure de communication. La demande de test comprend un identifiant de la fonction P-GW permettant à l'entité 20 de gestion des tests d'identifier un ou des tests correspondant à la fonction. La demande peut en outre comprendre des caractéristiques relatives à la fonction P-GW telles que par exemple, le débit de données à supporter, le nombre de sessions de données simultanées à supporter, les besoins en termes de chiffrement des sessions de telle façon que les tests de dispositifs d'hébergement les plus adaptés soient effectivement déterminés par l'entité 20.

Lors de la réception de cette demande, l'entité 20 de gestion des tests sélectionne un test correspondant à la fonction P-GW ou bien correspondant à un ensemble de fonctions de même type que la P-GW. Par exemple, pour simplifier la gestion des tests, l'entité 20 peut associer un ou plusieurs tests à un type de fonction plutôt qu'à une fonction. Le(s) test(s) déterminé(s) peut en outre tenir compte des caractéristiques requises pour la fonction P-GW telles que possiblement transmises par l'entité 10 d'orchestration lors de l'étape 301.

Lors de l'étape 302, l'entité 20 de gestion des tests transmet à l'entité 10 d'orchestration un ou plusieurs tests permettant d'évaluer les ressources d'hébergement par rapport aux exigences de la fonction P-GW. Il est à noter que le procédé vise l'installation de fonctions mais il vise également à proposer une cartographie des ressources disponibles, en termes de ressources d'hébergement, par rapport à des fonctions indépendamment de l'installation effective de la fonction P-GW. Il pourra par exemple être opportun de mettre en œuvre le procédé pour évaluer les capacités d'une infrastructure et plus spécifiquement des dispositifs d'hébergement de cette infrastructure pour accueillir des fonctions. Le procédé peut ainsi être mis en œuvre pour évaluer des infrastructures de partenaires, pour mettre à jour une infrastructure, ou pour faire un audit d'une infrastructure en amont d'un déploiement effectif par exemple.

Dans la suite de la description relative à la figure 5, il est considéré qu'un seul test a été transmis à l'entité 10 d'orchestration par l'entité 20 de gestion.

A la réception du test correspondant à la fonction P-GW, l'entité 10 d'orchestration transmet une demande de placement de la fonction P-GW à l'entité 30 de contrôle de la fonction P-GW. L'entité 30 de contrôle est par un exemple une entité de type VNFM (Virtual Network Function Manager). Une telle fonction prend en charge l'instanciation, la mise à jour, la montée en charge de fonctions virtualisées. Dans cet exemple, l'entité 30 de contrôle administre notamment les fonctions de type P-GW et a en charge d'instancier la fonction P-GW dans une infrastructure de communication. L'entité de contrôle reçoit ainsi lors de l'étape 303, la fonction à instancier, le test correspondant ou une donnée relative au test (identifiant, fichier exécutable...) pour tester un dispositif d'hébergement susceptible de l'accueillir, et possiblement des caractéristiques relatives à son installation. L'installation de la fonction virtualisée est pilotée par l'entité 30 de contrôle et exécutée par l'entité 40 de gestion. Selon une alternative, un même équipement peut assurer les deux missions de pilotage et d'installation.

Pour mener à bien cette installation, l'entité 30 de contrôle transmet à l'entité 40 de gestion d'une infrastructure de communication une requête de détermination de dispositif d'hébergement localisé dans l'infrastructure de communication apte à accueillir la fonction virtualisée. L'entité 30 de contrôle transmet en outre à l'entité 40 de gestion d'une infrastructure la fonction P-GW à installer ainsi que le test reçu de l'entité d'orchestration ainsi que possiblement les caractéristiques d'installation relatives à la fonction P-GW. Selon un exemple, l'entité 40 est une entité de type VIM. Il est à noter que l'entité 30 de contrôle peut transmettre la requête de détermination à plus d'une entité 40 de gestion notamment pour solliciter des fournisseurs d'infrastructure distincts ou plusieurs entités 40 de gestion d'une même infrastructure. L'entité 40 de gestion, à la réception de la requête de détermination, détermine des dispositifs d'hébergement pour installer la fonction P-GW en prenant en compte possiblement les caractéristiques d'installation. Selon une alternative, l'entité 40 de gestion, à partir du test et des caractéristiques reçues, lors d'une étape 305, évalue une capacité requise pour l'installation et obtient au moins une variable correspondant à un résultat de l'évaluation correspondant à un test théorique. L'entité de gestion obtient selon un exemple, une capacité de calcul et/ou un espace de stockage requis pour la fonction P-GW. Ces variables correspondent en quelque sorte à des données théoriques à atteindre pour les dispositifs d'hébergement pour pouvoir héberger la fonction P-GW. Selon un exemple, l'évaluation d'une capacité de stockage requise pour l'installation de la fonction P-GW correspond au test suivant :
- l'exécution d'une fonction f(x,N) où x est une valeur aléatoire et N, la taille d'un fichier F,
- l'exécution d'une fonction g(F) où g est une fonction de permutation de n éléments dans F,
- le calcul d'une variable z à partir de l'exécution d'une fonction de hachage sur les n éléments.

Selon une alternative, l'entité 40 de gestion détermine une durée T1 correspondant à une durée d'exécution de l'évaluation, donc au temps écoulé entre le démarrage de l'évaluation et l'obtention de la variable. Ce temps pourra être utilisé par l'entité de gestion pour évaluer les ressources mises à disposition par les entités de virtualisation sollicitées pour conduire les tests ainsi que pour départager des entités de virtualisation ayant des résultats de tests équivalents.

Lors d'une étape 306, l'entité 40 de gestion émet à destination d'une entité 50 de virtualisation, tel que par exemple un hyperviseur, une requête de compatibilité comprenant le test correspondant à la fonction P-GW déterminé initialement par l'entité 20 de gestion des tests. Selon une alternative, il peut s'agir d'une donnée relative à un test tel qu'un identifiant de test ou un fichier exécutable. En fonction du type de donnée, l'entité 50 de virtualisation peut associer la donnée reçue à un test. Outre le test à proprement parler, la requête de compatibilité peut, selon une alternative, comprendre des informations complémentaires relatives à l'évaluation menée par l'entité 40 de gestion lors de l'étape 305. Ainsi, selon l'évaluation exécutée par l'entité 40 de gestion, les données relatives au fichier F, à la taille N du fichier F et à la valeur aléatoire x sont transmises avec les fonctions f et g qui correspondent au test. L'entité 50 de virtualisation est alors en mesure de procéder à l'examen de dispositifs d'hébergement dont il a la charge.

Ainsi, lors de l'étape 307, l'entité 50 de virtualisation exécute le test reçu sur le dispositif d'hébergement 52 et obtient au moins une variable, correspondant par exemple à une capacité de calcul, un espace de stockage ainsi qu'une durée pour effectuer le test. Le test peut nécessiter une communication 307a avec le dispositif 52 d'hébergement notamment en fonction du test à effectuer. Selon un autre exemple, le test effectué sur le dispositif d'hébergement 52 ne requiert pas un échange avec le dispositif 52, notamment si l'entité 50 dispose d'informations suffisantes pour exécuter le test. Le dispositif d'hébergement est par exemple une machine virtuelle ou un conteneur, voire un serveur. L'entité 50 de virtualisation exécute le test suivant, relatif à un espace de stockage pour la fonction P-GW :
- stockage du fichier F
- exécution de la fonction f(x, N)
- exécution de la fonction g(F)
- obtention d'une variable y=h(g(F)) correspondant à une valeur de hachage.

Lors d'une étape 308, l'entité 50 de virtualisation transmet à l'entité 40 de gestion la variable y obtenue suite à l'exécution du test et, selon une alternative, la valeur de la durée d'exécution du test. L'entité 50 transmet, selon ce mode de réalisation, la valeur y de hachage contenue correspondant au test d'un espace de stockage du dispositif d'hébergement 52 pour la fonction P-GW.

Lors de l'étape 309, l'entité 40 de gestion détermine si le dispositif d'hébergement 52 dont l'aptitude à héberger la fonction P-GW a été évaluée et a donné lieu à la valeur y peut accueillir la fonction P-GW. L'entité 40 peut, selon un exemple, comparer la variable y avec la variable z obtenue lors de sa propre évaluation « théorique ». L'entité 40 de gestion peut également déterminer si un dispositif d'hébergement est plus apte qu'un autre à accueillir la fonction P-GW en comparant les valeurs de variable y reçues ainsi que possiblement les durées d'exécution des tests reçues d'une même entité de virtualisation ou d'entités distinctes. Ainsi, l'entité de gestion peut solliciter autant d'entité de virtualisation, en charge d'évaluer les aptitudes de dispositifs d'hébergement à accueillir la fonction P-GW, que nécessaire. Lors des étapes 310, 311, 312 et 313 correspondant aux étapes respectives 306, 307, 308 et 309, l'entité 40 de gestion transmet ainsi une requête de compatibilité à une entité 60 de virtualisation en charge des dispositifs d'hébergement 51 et 53. L'entité 40 obtient en retour les variables résultant de l'exécution des tests respectifs du dispositif 51 et du dispositif 53 pour héberger la fonction P-GW en provenance de l'entité 60 de virtualisation, testant un ou plusieurs autres dispositifs d'hébergement. Les tests peuvent nécessiter des communications 311a et 311b entre l'entité 60 de virtualisation et les dispositifs respectifs 51, 53 d'hébergement selon le test à effectuer et le type d'entité 60 de virtualisation concernée. Les étapes 310, 311, 312, 313 peuvent être exécutées à la suite ou en parallèle aux étapes 306 à 309. Si l'entité de gestion souhaite pouvoir évaluer un dispositif d'hébergement plus rapidement, une sollicitation en parallèle des entités de virtualisation sera préférée.

Selon un mode particulier, lors d'une étape 314, la variable y étant équivalente à l'entité z, l'entité 40 de gestion sélectionne un dispositif d'hébergement 52 testé par l'entité 50 de virtualisation et transmet à l'entité 50 de virtualisation une requête d'installation de la fonction P-GW sur le dispositif d'hébergement 52. Il est à noter que les différentes variables collectées par l'entité 40 de gestion ainsi que possiblement les durées d'exécution des tests permettant d'obtenir ces variables sont possiblement utilisées à des fins d'audit ou de cartographie d'une infrastructure de communication. L'entité 50 de virtualisation acquitte la requête d'installation reçue dans un message transmis lors de l'étape 315 et installe lors de l'étape 316 la fonction sur le dispositif 52 d'hébergement évalué lors de l'étape 307. Selon une alternative non représentée, l'installation peut être réalisée par l'entité 30 de contrôle suite à la réception d'un message d'installation comprenant une information sur le dispositif d'hébergement d'accueil pour la fonction P-GW à installer.

A la réception de l'acquittement, l'entité 40 de gestion peut elle-même acquitter, lors de l'étape 317, l'installation de la fonction P-GW sur le dispositif d'hébergement 52 de l'infrastructure de communication auprès de l'entité 30 de contrôle.

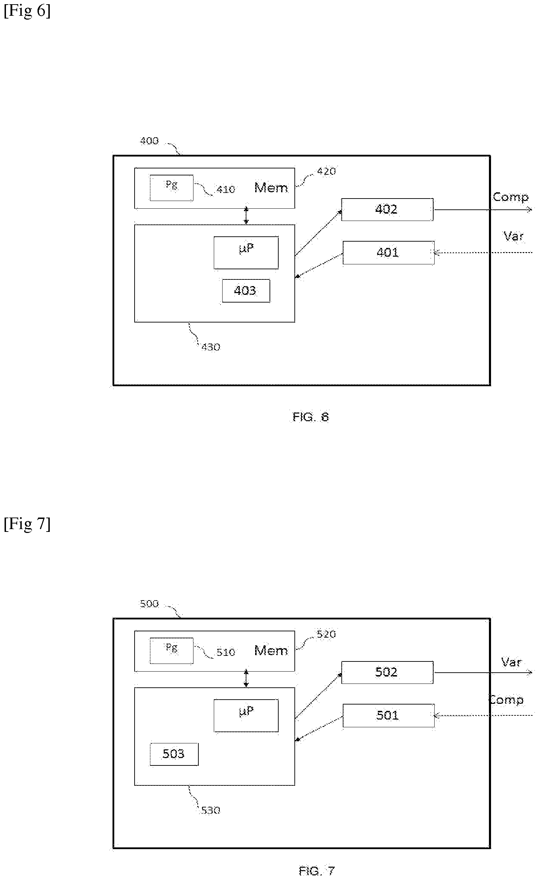

En relation avec la figure 6, on présente un exemple de structure d'un dispositif de détermination.

Le dispositif 400 de détermination met en œuvre le procédé de détermination, dont différents modes de réalisation viennent d'être décrits.

Un tel dispositif 400 peut être mis en œuvre dans une entité de gestion d'une infrastructure de communication, telle qu'une entité de type VIM ou de type VNF Controller.

Par exemple, le dispositif 400 comprend une unité de traitement 430, équipée par exemple d'un microprocesseur flP, et pilotée par un programme d'ordinateur 410, stocké dans une mémoire 420 et mettant en oeuvre le procédé de détermination selon l'invention. A l'initialisation, les instructions de code du programme d'ordinateur 410 sont par exemple chargées dans une mémoire RAM, avant d'être exécutées par le processeur de l'unité de traitement 430.

Un tel dispositif 400 comprend :
- un émetteur 402, apte à émettre à destination d'une entité de virtualisation une requête Comp de compatibilité comprenant au moins une donnée relative à un test d'une ressource du dispositif d'hébergement,
- un récepteur 401, apte à recevoir en provenance de l'entité de virtualisation au moins une première variable Var issue du test, relatif à la donnée émise, exécuté sur la ressource,
- un module 403 de détermination, apte à déterminer l'aptitude d'un dispositif
   d'hébergement à accueillir la fonction virtualisée en fonction de l'au moins une première variable reçue.

En relation avec la figure 7, on présente un exemple de structure d'un dispositif d'examen.

Le dispositif 500 d'examen met en œuvre le procédé d'examen, dont différents modes de réalisation viennent d'être décrits.

Un tel dispositif 500 peut être mis en œuvre dans une entité d'administration d'un dispositif d'hébergement tel qu'une machine virtuelle, un conteneur ou un serveur. Le dispositif peut également être mis en œuvre dans un dispositif d'hébergement. Le dispositif 500 peut être instancié dans une architecture de communication fixe ou mobile.

Par exemple, le dispositif 500 comprend une unité de traitement 530, équipée par exemple d'un microprocesseur µP, et pilotée par un programme d'ordinateur 510, stocké dans une mémoire 520 et mettant en œuvre le procédé d'examen selon l'invention. A l'initialisation, les instructions de code du programme d'ordinateur 510 sont par exemple chargées dans une mémoire RAM, avant d'être exécutées par le processeur de l'unité de traitement 530.

Un tel dispositif 500 comprend :
- un récepteur 501, apte à recevoir en provenance d'une entité de gestion de l'infrastructure une requête Comp de compatibilité comprenant au moins une donnée relative à un test de la ressource,
- un module 503 d'exécution, apte à exécuter sur la ressource l'au moins un test relatif à la donnée reçue permettant d'obtenir au moins une première variable,
- un émetteur 502, apte à émettre à destination de l'entité de gestion l'au moins une première variable Var.

## Revendications

1. Procédé de détermination d'un dispositif (51,52) d'hébergement d'une infrastructure (100) de réseau d'un opérateur pour l'installation d'une fonction virtualisée, ladite fonction virtualisée contribuant à la transmission et au traitement d'au moins une information relative à un service, le procédé étant mis en œuvre par une entité (40) de gestion de ladite infrastructure et comprenant:
- l'émission (306,310) à destination d'une entité (50,60) de virtualisation d'une requête de compatibilité comprenant au moins une donnée relative à un test d'une ressource du dispositif (51,52) d'hébergement en lien avec une caractéristique de ladite fonction virtualisée, le test étant spécifique à la caractéristique de la fonction virtualisée à installer,
- la réception (308,312) en retour de l'émission de la requête de compatibilité, en provenance de l'entité (50,60) de virtualisation, d'au moins une première variable issue du test, relatif à la donnée émise, exécuté sur la ressource par l'entité de virtualisation à la suite de la requête reçue,
- une émission à destination de l'entité (50) de virtualisation d'une requête d'installation de la fonction virtualisée sur le dispositif (52) d'hébergement si le dispositif d'hébergement est déterminé apte à accueillir la fonction virtualisée, l'aptitude du dispositif d'hébergement (51,52) à accueillir la fonction virtualisée étant déterminée en fonction de l'au moins une première variable reçue.

2. Procédé de détermination, selon la revendication 1, comprenant en outre l'obtention (305, 309) d'au moins une deuxième variable à partir d'une évaluation d'au moins une capacité requise pour l'installation de la fonction virtualisée.

3. Procédé de détermination, selon la revendication 2, où l'au moins une deuxième variable comprend une durée T1 correspondant à une durée d'exécution de l'évaluation.

4. Procédé de détermination, selon la revendication 1, où l'au moins une donnée relative à un test est préalablement obtenue (304) d'une entité (30) de contrôle de la fonction virtualisée.

5. Procédé de détermination, selon la revendication 1, où la ressource du dispositif (51,52) d'hébergement est relative à un espace de stockage.

6. Procédé de détermination, selon la revendication 1, où la ressource du dispositif (51,52) d'hébergement est relative à une capacité de calcul.

7. Procédé d'examen d'une ressource d'un dispositif (51,52) d'hébergement d'une infrastructure (100) de réseau d'un opérateur en vue de l'installation d'une fonction virtualisée, ladite fonction virtualisée contribuant à la transmission et au traitement d'au moins une information relative à un service, le procédé étant mis en œuvre par une entité (50,60) de virtualisation de ladite infrastructure et comprenant:
- la réception (306,310) en provenance d'une entité (40) de gestion de l'infrastructure d'une requête (Comp) de compatibilité comprenant au moins une donnée relative à un test de la ressource en lien avec une caractéristique de ladite fonction virtualisée, le test étant spécifique à la caractéristique de la fonction virtualisée à installer,
- l'exécution (307,311), à la suite de la requête reçue, sur la ressource de l'au moins un test relatif à la donnée reçue permettant d'obtenir au moins une première variable (Var),
- l'émission (308,312), en retour de la réception de la requête de compatibilité, à destination de l'entité (40) de gestion de l'au moins une première variable (Var),
- une réception en provenance de l'entité de gestion d'une requête d'installation de la fonction virtualisée sur le dispositif (52) d'hébergement si le dispositif d'hébergement est déterminé apte à accueillir la fonction virtualisée, l'aptitude du dispositif d'hébergement (51,52) à accueillir la fonction virtualisée étant déterminée en fonction de l'au moins une première variable émise.

8. Procédé d'examen, selon la revendication 7, où l'au moins une première variable (Var) comprend une durée T2.

9. Dispositif (400) de détermination d'un dispositif (51,52) d'hébergement d'une infrastructure (100) de réseau d'un opérateur pour l'installation d'une fonction virtualisée, ladite fonction virtualisée contribuant à la transmission et au traitement d'au moins une information relative à un service, comprenant:
- un émetteur (402), apte à émettre à destination d'une entité (50,60) de virtualisation une requête (Comp) de compatibilité comprenant au moins une donnée relative à un test d'une ressource du dispositif (51,52) d'hébergement en lien avec une caractéristique de ladite fonction virtualisée, le test étant spécifique à la caractéristique de la fonction virtualisée à installer
- un récepteur (401), apte à recevoir en retour de l'émission de la requête de compatibilité en provenance de l'entité (50,60) de virtualisation au moins une première variable (Var) issue du test, relatif à la donnée émise, exécuté sur la ressource, par l'entité de virtualisation à la suite de la requête reçue
- un module d'émission, apte à émettre à destination de l'entité (50) de virtualisation d'une requête d'installation de la fonction virtualisée sur le dispositif (52) d'hébergement si le dispositif d'hébergement est déterminé apte à accueillir la fonction virtualisée, l'aptitude d'un dispositif (51,52) d'hébergement à accueillir la fonction virtualisée étant déterminée en fonction de l'au moins une première variable (Var) reçue.

10. Dispositif (500) d'examen d'une ressource d'un dispositif (51,52) d'hébergement d'une infrastructure (100) de réseau d'un opérateur en vue de l'installation d'une fonction virtualisée, ladite fonction virtualisée contribuant à la transmission et au traitement d'au moins une information relative à un service, comprenant:
- un récepteur (501), apte à recevoir en provenance d'une entité (40) de gestion de l'infrastructure une requête (Comp) de compatibilité comprenant au moins une donnée relative à un test de la ressource en lien avec une caractéristique de ladite fonction virtualisée, le test étant spécifique à la caractéristique de la fonction virtualisée à installer,
- un module (503) d'exécution, apte à exécuter à la suite de la requête reçue, sur la ressource l'au moins un test relatif à la donnée reçue permettant d'obtenir au moins une première variable (Var),
- un émetteur (502), apte à émettre en retour de la réception de la requête de compatibilité à destination de l'entité (40) de gestion l'au moins une première variable (Var),
- un récepteur, apte à recevoir en provenance de l'entité de gestion d'une requête d'installation de la fonction virtualisée sur le dispositif (52) d'hébergement si le dispositif d'hébergement est déterminé apte à accueillir la fonction virtualisée, l'aptitude du dispositif d'hébergement (51,52) à accueillir la fonction virtualisée étant déterminée en fonction de l'au moins une première variable émise.

11. Système de détermination d'un dispositif d'hébergement d'une infrastructure de réseau d'un opérateur pour l'installation d'une fonction virtualisée, ladite fonction virtualisée contribuant à la transmission et au traitement d'au moins une information relative à un service, comprenant:
- une entité (40) de gestion comprenant un dispositif (400) de détermination selon la revendication 9,
- une entité (50,60) de virtualisation comprenant un dispositif (500) d'examen selon la revendication 10,
- au moins un dispositif d'hébergement.

12. Programme d'ordinateur comportant des instructions pour la mise en œuvre du procédé de détermination selon l'une quelconque des revendications 1 à 6, lorsque le programme est exécuté par un processeur.

13. Support d'enregistrement lisible par un dispositif de détermination conforme à la revendication 9, sur lequel est enregistré le programme selon la revendication 12.

## Patentansprüche

1. Verfahren zur Bestimmung einer Host-Vorrichtung (51,52) einer Netzwerkinfrastruktur (100) eines Betreibers zwecks Installation einer virtualisierten Funktion, wobei die virtualisierte Funktion zur Übertragung und zur Verarbeitung mindestens einer Information bezüglich eines Dienstes beiträgt, wobei das Verfahren von einer Verwaltungseinheit (40) der Infrastruktur durchgeführt wird und umfasst:
- das Senden (306,310), an eine Virtualisierungseinheit (50,60), einer Kompatibilitätsanfrage, die mindestens ein Datenelement bezüglich eines Tests einer Ressource der Host-Vorrichtung (51,52) in Verbindung mit einem Merkmal der virtualisierten Funktion umfasst, wobei der Test für das Merkmal der zu installierenden virtualisierten Funktion spezifisch ist,
- das Empfangen (308,312) von der Virtualisierungseinheit (50,60), als Antwort auf das Senden der Kompatibilitätsanfrage, mindestens einer ersten Variable, die aus dem Test bezüglich des gesendeten Datenelements hervorgegangen ist, der von der Virtualisierungseinheit an der Ressource im Anschluss an die empfangene Anfrage ausgeführt wurde,
- ein Senden, an die Virtualisierungseinheit (50), einer Anfrage zur Installation der virtualisierten Funktion auf der Host-Vorrichtung (52), falls bestimmt wird, dass die Host-Vorrichtung zum Aufnehmen der virtualisierten Funktion geeignet ist, wobei die Eignung der Host-Vorrichtung (51,52) zum Aufnehmen der virtualisierten Funktion in Abhängigkeit von der mindestens einen empfangenen ersten Variablen bestimmt wird.

2. Verfahren zur Bestimmung nach Anspruch 1, umfassend ferner das Erhalten (305, 309) mindestens einer zweiten Variable ausgehend von einer Evaluierung mindestens einer zur Installation der virtualisierten Funktion erforderlichen Kapazität.

3. Verfahren zur Bestimmung nach Anspruch 2, wobei die mindestens eine zweite Variable eine Dauer T1 umfasst, die einer Ausführungsdauer der Evaluierung entspricht.

4. Verfahren zur Bestimmung nach Anspruch 1, wobei das mindestens eine Datenelement bezüglich eines Tests vorab von einer Einheit (30) zur Steuerung der virtualisierten Funktion erhalten wird (304).

5. Verfahren zur Bestimmung nach Anspruch 1, wobei sich die Ressource der Host-Vorrichtung (51,52) auf einen Speicherplatz bezieht.

6. Verfahren zur Bestimmung nach Anspruch 1, wobei sich die Ressource der Host-Vorrichtung (51,52) auf eine Rechenkapazität bezieht.

7. Verfahren zur Prüfung einer Ressource einer Host-Vorrichtung (51,52) einer Netzwerkinfrastruktur (100) eines Betreibers im Hinblick auf die Installation einer virtualisierten Funktion, wobei die virtualisierte Funktion zur Übertragung und zur Verarbeitung mindestens einer Information bezüglich eines Dienstes beiträgt, wobei das Verfahren von einer Virtualisierungseinheit (50,60) der Infrastruktur durchgeführt wird und umfasst:
- das Empfangen (306,310), von einer Verwaltungseinheit (40) der Infrastruktur, einer Kompatibilitätsanfrage (Comp), die mindestens ein Datenelement bezüglich eines Tests der Ressource in Verbindung mit einem Merkmal der virtualisierten Funktion umfasst, wobei der Test für das Merkmal der zu installierenden virtualisierten Funktion spezifisch ist,
- das Ausführen (307,311), im Anschluss an die empfangene Anfrage, des mindestens einen Tests bezüglich des empfangenen Datenelements an der Ressource, was es ermöglicht, mindestens eine erste Variable (Var) zu erhalten,
- das Senden (308,312), an die Verwaltungseinheit (40), als Antwort auf das Empfangen der Kompatibilitätsanfrage, der mindestens einen ersten Variable (Var),
- ein Empfangen, von der Verwaltungseinheit, einer Anfrage zur Installation der virtualisierten Funktion auf der Host-Vorrichtung (52), falls bestimmt wird, dass die Host-Vorrichtung zum Aufnehmen der virtualisierten Funktion geeignet ist, wobei die Eignung der Host-Vorrichtung (51,52) zum Aufnehmen der virtualisierten Funktion in Abhängigkeit von der mindestens einen gesendeten ersten Variable bestimmt wird.

8. Verfahren zur Prüfung nach Anspruch 7, wobei die mindestens eine erste Variable (Var) eine Dauer T2 umfasst.

9. Vorrichtung (400) zur Bestimmung einer Host-Vorrichtung (51,52) einer Netzwerkinfrastruktur (100) eines Betreibers zwecks Installation einer virtualisierten Funktion, wobei die virtualisierte Funktion zur Übertragung und zur Verarbeitung mindestens einer Information bezüglich eines Dienstes beiträgt, umfassend:
- einen Sender (402), der geeignet ist, an eine Virtualisierungseinheit (50,60) eine Kompatibilitätsanfrage (Comp) zu senden, die mindestens ein Datenelement bezüglich eines Tests einer Ressource der Host-Vorrichtung (51,52) in Verbindung mit einem Merkmal der virtualisierten Funktion umfasst, wobei der Test für das Merkmal der zu installierenden virtualisierten Funktion spezifisch ist
- einen Empfänger (401), der geeignet ist, als Antwort auf das Senden der Kompatibilitätsanfrage von der Virtualisierungseinheit (50,60) mindestens eine erste Variable (Var) zu empfangen, die aus dem Test bezüglich des gesendeten Datenelements hervorgegangen ist, der von der Virtualisierungseinheit im Anschluss an die empfangene Anfrage an der Ressource ausgeführt wurde
- ein Sendemodul, das geeignet ist, an die Virtualisierungseinheit (50) eine Anfrage zur Installation der virtualisierten Funktion auf der Host-Vorrichtung (52) zu senden, falls bestimmt wird, dass die Host-Vorrichtung zum Aufnehmen der virtualisierten Funktion geeignet ist, wobei die Eignung einer Host-Vorrichtung (51,52) zum Aufnehmen der virtualisierten Funktion in Abhängigkeit von der mindestens einen empfangenen ersten Variable (Var) bestimmt wird.

10. Vorrichtung (500) zur Prüfung einer Ressource einer Host-Vorrichtung (51,52) einer Netzwerkinfrastruktur eines Betreibers (100) im Hinblick auf die Installation einer virtualisierten Funktion, wobei die virtualisierte Funktion zur Übertragung und zur Verarbeitung mindestens einer Information bezüglich eines Dienstes beiträgt, umfassend:
- einen Empfänger (501), der geeignet ist, von einer Verwaltungseinheit (40) der Infrastruktur eine Kompatibilitätsanfrage (Comp) zu empfangen, die mindestens ein Datenelement bezüglich eines Tests der Ressource in Verbindung mit einem Merkmal der virtualisierten Funktion umfasst, wobei der Test für das Merkmal der zu installierenden virtualisierten Funktion spezifisch ist,
- ein Ausführungsmodul (503), das geeignet ist, im Anschluss an die empfangene Anfrage an der Ressource den mindestens einen Test bezüglich des empfangenen Datenelements auszuführen, was es ermöglicht, mindestens eine erste Variable (Var) zu erhalten,
- einen Sender (502), der geeignet ist, als Antwort auf das Empfangen der Kompatibilitätsanfrage die mindestens eine erste Variable (Var) an die Verwaltungseinheit (40) zu senden,
- einen Empfänger, der geeignet ist, von der Verwaltungseinheit eine Anfrage zur Installation der virtualisierten Funktion auf der Host-Vorrichtung (52) zu empfangen, wenn bestimmt wird, dass die Host-Vorrichtung zum Aufnehmen der virtualisierten Funktion geeignet ist, wobei die Eignung der Host-Vorrichtung (51,52) zum Aufnehmen der virtualisierten Funktion in Abhängigkeit von der mindestens einen gesendeten ersten Variable bestimmt wird.

11. System zur Bestimmung einer Host-Vorrichtung einer Netzwerkinfrastruktur eines Betreibers zwecks Installation einer virtualisierten Funktion, wobei die virtualisierte Funktion zur Übertragung und zur Verarbeitung mindestens einer Information bezüglich eines Dienstes beiträgt, umfassend:
- eine Verwaltungseinheit (40), die eine Vorrichtung (400) zur Bestimmung nach Anspruch 9 umfasst,
- eine Virtualisierungseinheit (50,60), die eine Vorrichtung (500) zur Prüfung nach Anspruch 10 umfasst,
- mindestens eine Host-Vorrichtung.

12. Computerprogramm, das Anweisungen beinhaltet, die bei der Ausführung des Programms durch einen Prozessor das Verfahren zur Bestimmung nach einem der Ansprüche 1 bis 6 durchführen.

13. Speichermedium, das von einer Vorrichtung zur Bestimmung nach Anspruch 9 gelesen werden kann und auf dem das Programm nach Anspruch 12 gespeichert ist.

## Claims

1. Method for determining a hosting device (51,52) of a network infrastructure (100) of an operator for the installation of a virtualized function, said virtualized function contributing to the transmission and the processing of at least one item of information relating to a service, the method being implemented by a management entity (40) of said infrastructure and comprising:
- the transmission (306,310), to a virtualization entity (50,60), of a compatibility request comprising at least one datum relating to a test of a resource of the hosting device (51,52) associated with a characteristic of said virtualized function, the test being specific to the characteristic of the virtualized function to be installed,
- the reception (308,312) in return, in response to the transmission of the compatibility request, from the virtualization entity (50,60), of at least one first variable deriving from the test, relating to the transmitted datum, executed on the resource by the virtualization entity following the request received,
- a transmission, to the virtualization entity (50), of a request to install the virtualized function on the hosting device (52) if the hosting device is determined to be capable of accommodating the virtualized function, the aptitude of the hosting device (51,52) to accommodate the virtualized function being determined as a function of the at least one first variable received.

2. Determination method according to Claim 1, further comprising the obtaining (305,309) of at least one second variable from an evaluation of at least one capacity required for the installation of the virtualized function.

3. Determination method according to Claim 2, in which the at least one second variable comprises a duration T1 corresponding to a duration of execution of the evaluation.

4. Determination method according to Claim 1, in which the at least one datum relating to a test is previously obtained (304) from a control entity (30) of the virtualized function.

5. Determination method according to Claim 1, in which the resource of the hosting device (51,52) relates to a storage space.

6. Determination method according to Claim 1, in which the resource of the hosting device (51,52) relates to a computation capacity.

7. Method for examining a resource of a hosting device (51,52) of a network infrastructure (100) of an operator with a view to the installation of a virtualized function, said virtualized function contributing to the transmission and the processing of at least one item of information relating to a service, the method being implemented by a virtualization entity (50,60) of said infrastructure and comprising:
- the reception (306,310), from a management entity (40) of the infrastructure, of a compatibility request (Comp) comprising at least one datum relating to a test of the resource associated with a characteristic of said virtualized function, the test being specific to the characteristic of the virtualized function to be installed,
- the execution (307,311), following the request received, on the resource, of the at least one test relating to the received datum allowing at least one first variable (Var) to be obtained,
- the transmission (308,312), in return, in response to the reception of the compatibility request, to the management entity (40), of the at least one first variable (Var),
- a reception from the management entity of a request to install the virtualized function on the hosting device (52) if the hosting device is determined to be capable of accommodating the virtualized function, the aptitude of the hosting device (51,52) to accommodate the virtualized function being determined as a function of the at least one first variable transmitted.

8. Examination method according to Claim 7, in which the at least one first variable (Var) comprises a duration T2.

9. Device (400) for determining a hosting device (51,52) of a network infrastructure (100) of an operator for the installation of a virtualized function, said virtualized function contributing to the transmission and the processing of at least one item of information relating to a service, comprising:
- a transmitter (402), capable of transmitting, to a virtualization entity (50,60), a compatibility request (Comp) comprising at least one datum relating to a test of a resource of the hosting device (51,52) associated with a characteristic of said virtualized function, the test being specific to the characteristic of the virtualized function to be installed,
- a receiver (401), capable of receiving in return, in response to the transmission of the compatibility request, from the virtualization entity (50,60), at least one first variable (Var) deriving from the test, relating to the transmitted datum, executed on the resource, by the virtualization entity following the request received,
- a transmission module, capable of transmitting, to the virtualization entity (50), a request to install the virtualized function on the hosting device (52) if the hosting device is determined to be capable of accommodating the virtualized function, the aptitude of a hosting device (51,52) to accommodate the virtualized function being determined as a function of the at least one first variable (Var) received.

10. Device (500) for examining a resource of a hosting device (51,52) of a network infrastructure (100) of an operator with a view to the installation of a virtualized function, said virtualized function contributing to the transmission and the processing of at least one item of information relating to a service, comprising:
- a receiver (501), capable of receiving from a management entity (40) of the infrastructure, a compatibility request (Comp) comprising at least one datum relating to a test of the resource associated with a characteristic of said virtualized function, the test being specific to the characteristic of the virtualized function to be installed,
- an execution module (503), capable of executing, following the request received, on the resource, the at least one test relating to the received datum allowing at least one first variable (Var) to be obtained,
- a transmitter (502), capable of transmitting, in return, in response to the reception of the compatibility request, to the management entity (40), the at least one first variable (Var),
- a receiver, capable of receiving, from the management entity, a request to install the virtualized function on the hosting device (52) if the hosting device is determined to be capable of accommodating the virtualized function, the aptitude of the hosting device (51,52) to accommodate the virtualized function being determined as a function of the at least one first variable transmitted.

11. System for determining a hosting deice of a network infrastructure of an operator for the installation of a virtualized function, said virtualized function contributing to the transmission and the processing of at least one item of information relating to a service, comprising:
- a management entity (40) comprising a determination device (400) according to Claim 9,
- a virtualization entity (50,60) comprising an examination device (500) according to Claim 10,
- at least one hosting device.

12. Computer program comprising instructions for the implementation of the determination method according to any one of Claims 1 to 6, when the program is run by a processor.

13. Storage medium that can be read by a determination device according to Claim 9, on which the program according to Claim 12 is stored.
